# FASCICULE DE BREVET EUROPEEN

(11) **EP 0 465 366 B1**
(45) Date de publication et mention de la délivrance du brevet: **02.02.1994**
(21) Numéro de dépôt: 91401852.8
(22) Date de dépôt: 04.07.1991
(51) Int. Cl.: F25J 3/02, F25J 3/06

(54) **Procédé et installation de production simultanée de méthane et monoxyde de carbone**
Verfahren und Vorrichtung zur gleichzeitigen Produktion von Methan und Kohlenmonoxid
Process and installation for the simultaneous production of methane and carbon monoxide

(30) Priorité: 04.07.1990 FR 9008464
(43) Date de publication de la demande: 08.01.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Billy, Jean, F-94420 Le Plessis Trevise (FR)
(74) Mandataire: Le Moenner, Gabriel

(56) Documents cités:
- EP-A- 0 017 297
- EP-A- 0 317 851
- EP-A- 0 340 465
- GB-A- 1 304 568

## Description

La présente invention concerne la production de méthane et de monoxyde de carbone. Elle est relative en premier lieu à un procédé de production simultanée de méthane et de monoxyde de carbone à partir d'un gaz traité constitué essentiellement de ces deux composants et d'hydrogène, du type décrit en GB-A-1304568 dans lequel le gaz traité est refroidi et partiellement condensé pour former une phase vapeur et une phase liquide, la phase liquide est détendue, vaporisée, réchauffée et introduite dans une colonne d'élimination d'hydrogène ; le liquide de cuve de cette colonne est détendu et divisé en plusieurs courants ; un premier de ces courants est vaporisé et réchauffé jusqu'à sa température de rosée et introduit dans une colonne de séparation CO/CH₄, et un deuxième de ces courants est introduite dans cette même colonne au voisinage de sa température de bulle ; et l'on fournit un appoint de froid au moyen d'un cycle frigorifique extérieur.

Dans la technique habituelle, lesdits courants sont au nombre de deux, et l'on alimente par conséquent en deux points la colonne de séparation CO/CH₄. On constate que le diagramme d'échange de chaleur (enthalpies en ordonnées, températures en abscisses) de l'échangeur de chaleur indirect à contre-courant qui sert à effectuer les divers refroidissements, vaporisations et réchauffements, est très ouvert en partie chaude, les écarts de températures étant de l'ordre de 15°C au bout chaud. Ceci correspond à une irréversibilité relativement importante du procédé, et l'invention a pour but de réduire cette irréversibilité afin de rendre l'ensemble du traitement plus économique du point de vue la dépense d'énergie.

A cet effet, l'invention a pour objet un procédé du type précité, caractérisé en ce que ledit liquide de cuve avant d'être détendu est sous-refroidi et, après détente, est divisé en trois courants, le troisième courant étant vaporisé et réchauffé jusqu'à une température intermédiaire entre lesdites températures de rosée et de bulle et introduit à cette température intermédiaire dans la colonne de séparation CO/CH₄.

Suivant d'autre caractéristiques :
- ladite phase vapeur est lavée au méthane liquide dans une troisième colonne pour produire un gaz de tête constitué essentiellement d'hydrogène et un liquide de cuve, ce dernier étant également détendu et introduit dans la colonne d'élimination d'hydrogène, une partie du méthane liquide produit en cuve de la colonne de séparation CO/CH₄ étant utilisée pour effectuer la lavage au méthane ;
- le cycle frigorifique est un cycle au monoxyde de carbone, le monoxyde de carbone nécessaire pour le fonctionnement de ce cycle étant prélevé sur la production de tête de la colonne de séparation CO/CH₄.

L'invention a également pour objet une installation de mise en oeuvre d'un tel procédé. Cette installation, du type comprenant un échangeur de chaleur, un séparateur de phases, une colonne d'élimination d'hydrogène et une colonne de séparation CO/CH₄ ; des moyens pour refroidir et condenser partiellement le gaz traité et l'introduire dans le séparateur de phases pour former une phase vapeur et une phase liquide ; des moyens pour détendre, vaporiser et réchauffer la phase liquide et l'introduire dans la colonne d'élimination d'hydrogène ; des moyens pour détendre et diviser en plusieurs courants le liquide de cuve de cette colonne ; des moyens pour réchauffer l'un de ces courants jusqu'à sa température de rosée et l'introduire dans la colonne de séparation CO/CH₄ ; des moyens pour introduire un autre de ces courants dans cette même colonne au voisinage de sa température de bulle ; et un cycle frigorifique fournissant un appoint de froid, est caractérisée en ce qu'il est prévu des moyens pour sous-refroidir ledit liquide de cuve avant détente, des moyens pour le diviser en trois courants, et des moyens pour vaporiser et réchauffer le troisième courant jusqu'à une température intermédiaire entre lesdites températures de rosée et de bulle et pour l'introduire à cette température intermédiaire dans la colonne de séparation CO/CH₄.

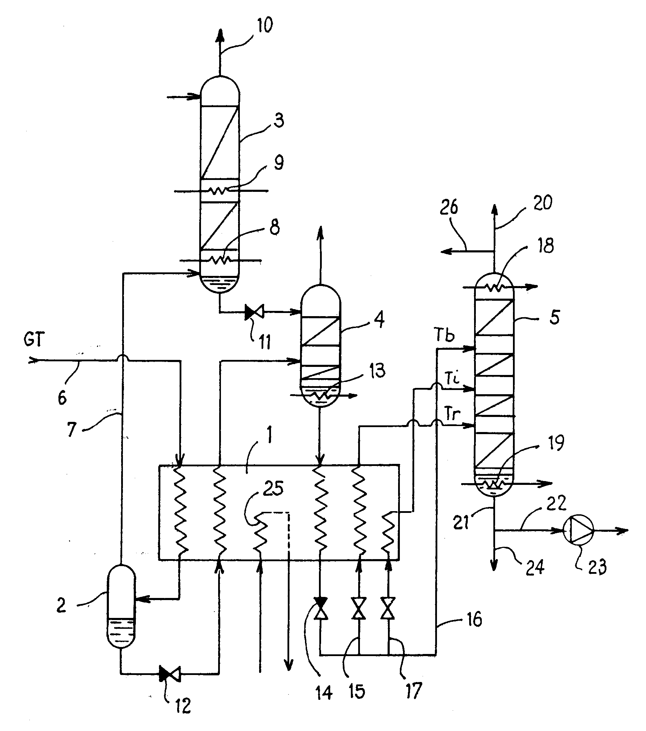

Un exemple de mise en oeuvre de l'invention va maintenant être décrit en regard du dessin annexé, sur lequel la Figure unique représente schématiquement une installation de production de CO et de CH₄ conforme à l'invention.

L'installation représentée au dessin comprend essentiellement un échangeur de chaleur indirect 1 à circulation à contre-courant des fluides mis en relation d'échange thermique, un séparateur de phases 2, une colonne 3 de lavage au méthane, une colonne 4 d'élimination d'hydrogène et une colonne 5 de séparation CO/CH₄. Les pressions indiquées ci-dessous sont des pressions absolues approximatives et, comme les températures indiquées, ne sont fournies qu'à titre d'exemples numériques.

Le gaz traité (GT) est un mélange gazeux constitué essentiellement d'hydrogène, de monoxyde de carbone de de méthane. Il provient par exemple du prérefroidissement jusqu'à - 140°C environ d'un gaz de reformage catalytique d'hydrocarbures, dont les autres constituants ont été éliminés par condensation au cours de ce prérefroidissement.

Le gaz traité arrive vers 26 bars dans l'installation via une conduite 6, traverse l'échangeur 1 de son bout chaud à son bout froid, d'où il sort à - 180°C, partiellement condensé, pour être séparé en une phase liquide et une phase vapeur dans le séparateur 2.

La phase vapeur est envoyée via une conduite 7 en cuve de la colonne de lavage 3, laquelle est alimentée en tête par du méthane liquide et est maintenue à peu près isotherme sur toute sa hauteur au moyen de condenseurs 8, 9 prévus à des hauteurs appropriées.

Un courant d'hydrogène gazeux exempt de CO et contenant à peu près 1 % de CH₄ est produit en tête de la colonne 3 via une conduite 10, et le liquide de cuve, constitué essentiellement de CO et te CH₄ mais contenant une petite fraction d'hydrogène dissous, est détendu dans une vanne de détente 11 et introduit en tête de la colonne 4, laquelle fonctionne sous environ 10 bars.

La phase liquide recueillie dans le séparateur 2 est détendue vers 10 bars dans une vanne de détente 12, vaporisée et réchauffée du bout froid au bout chaud de l'échangeur 1, et introduite à une hauteur intermédiaire dans la colonne 4.

La colonne 4, chauffée en cuve par un rebouilleur 13, produit en tête un gaz constitué d'hydrogène contenant une petite fraction de CO et de CH₄, et en cuve un mélange liquide de ces deux corps, exempt d'hydrogène. Ce liquide est sous-refroidi du bout chaud au bout froid de l'échangeur 1, détendu vers 2,6 bars dans une vanne de détente 14, et divisé en trois courants :
- un premier courant, véhiculé par unie coduite 15, est vaporisé et réchauffé du bout froid au bout chaud de l'échangeur jusqu'à sa température de rosée Tr, soit - 154°C, et introduit à cette température à une hauteur intermédiaire de la colonne 5 ;
- un second courant, véhiculé par une conduite 16, est directement introduit dans la colonne 5 au voisinage de sa température de bulle Tb, soit à environ -180°C, et donc au dessus du premier courant ; et
- un troisième courant, véhiculé par une conduite 17, est vaporisé et réchauffé dans l'échangeur 1, jusqu'à une température intermédiaire Ti comprise entre Tr et Tb ; à cette température Ti, il est sorti de l'échangeur et introduit dans la colonne 5, entre les deux alimentations à Tr et Tb ; la température Ti est notamment voisine de la moyenne des températures Tr et. Tb, soit de l'ordre de - 165°C.

La colonne 5 comprend un condenseur de tête 18 et un rebouilleur de cuve 19. Elle produit en tête, via une conduite 20, du CO gazeux, et en cuve, via une conduite 21, du CH₄ liquide. Une partie de ce méthane est prélevée via une conduite 22, comprimée par une pompe 23, et, après sous-refroidissement (non représenté) à - 180°C, envoyée au sommet de la colonne 3, et le reste, évacué via une conduite 24, constitue la production de méthane de l'installation.

Un appoint de froid est fourni à l'installation par un cycle à CO fonctionnant entre une haute pression de 28 bars et une basse pression de 2,6 bars. On a seulement représenté sur le dessin quelques éléments de ce cyle, à savoir les condenseurs 13 et 19 utilisés comme rebouilleurs en cuve des colonnes 4 et. 5, les évaporateurs 8, 9 utilisés comme condenseurs dans la colonne 3, l'évaporateur 18 utilisé comme condenseur de tête de la colonne 5, et un évaporateur 25 prévu dans la partie froide de l'échangeur 1. Le monoxyde de carbone nécessaire au bon fonctionnement de ce cycle est prélevé sur la production de CO de l'installation, c'est-à-dire sur une conduite 26 piquée sur la conduite 20.

Par rapport à un installation identique dépourvue de la conduite 17, le gain en énergie de compression du CO de cycle est de l'ordre de 8 %. Ceci se traduit notamment par un diagramme d'échange de chaleur nettement plus resserré dans la partie chaude de l'échangeur 1.

## Revendications

1. Procédé de production simultanée de méthane et de monoxyde de carbone à partir d'un gaz traité constitué essentiellement de ces deux composants et d'hydrogène, du type dans lequel le gaz traité (GT) est refroidi et partiellement condensé pour former une phase vapeur et une phase liquide, la phase liquide est détendue, vaporisée, réchauffée et introduite dans une colonne (4) d'élimination d'hydrogène ; le liquide de cuve de cette colonne est détendu et divisé en plusieurs courants ; un premier de ces courants est vaporisé et réchauffé jusqu'à sa température de rosée (Tr) et introduit dans une colonne (5) CO/CH4, et un deuxième de ces courants est introduit dans cette même colonne (5) au voisinage de sa température de bulle (Tb) ; et l'on fournit un appoint de froid au moyen d'un cycle frigorifique extérieur ; caractérisé en ce que ledit liquide de cuve, avant d'être détendu est sous-refroidi et après détente est divisé en trois courants, le troisième courant étant vaporisé et réchauffé jusqu'à une température (Ti) intermédiaire entre lesdites températures de rosée et de bulle et introduit à cette température intermédiaire dans la colonne(5) de séparation CO/CH₄.

2. Procédé suivant la revendication 1, caractérisé en ce que ladite phase vapeur est lavée au méthane liquide dans une troisième colonne (3) pour produire un gaz de tête constitué essentiellement d'hydrogène et un liquide de cuve, ce dernier étant également détendu et introduit dans la colonne (4) d'élimination d'hydrogène, une partie du méthane liquide produit en cuve de la colonne (5) de séparation CO/CH₄ étant utilisée pour effectuer le lavage au méthane.

3. Procédé suivant la revendication 1 ou 2, caractérisé en ce que la cycle frigorifique est un cycle au monoxyde de carbone, le monoxyde de carbone nécessaire pour le fonctionnement de ce cycle étant prélevé sur la production de tête de la colonne (5) de séparation CO/CH₄.

4. Installation de production simultanée de méthane et de monoxyde de carbone à partir d'un gaz traité constitué essentiellement de ce deux corps et d'hydrogène, du type comprenant un échangeur de chaleur (1), un séparateur de phases (2), une colonne (4) d'élimination d'hydrogène et une colonne (5) de séparation CO/CH₄, des moyens pour refroidir et condenser partiellement le gaz traité (GT) et l'introduire dans le séparateur de phases pour former une phase vapeur et une phase liquide, des moyens pour détendre, vaporiser et réchauffer la phase liquide et l'introduire dans la colonne (4) d'élimination d'hydrogène ; des moyens pour détendre et diviser en plusieurs courants le liquide de cuve de cette colonne (4) ; des moyens pour réchauffer un premier de ces courants jusqu'à sa température de rosée (Tr) et l'introduire dans la colonne (5) de séparation CO/CH₄ ; des moyens pour introduire un deuxième de ces courants dans cette même colonne (5) au voisinage de sa température de bulle (Tb) ; et un cycle frigorifique fournissant un appoint de froid, caractérisée en ce qu'il est prévu des moyens pour sous-refroidir ledit liquide de cuve avant détente, des moyens pour le diviser en trois courants, et des moyens pour vaporiser et réchauffer le troisième courant jusqu'à une température (Ti) intermédiaire entre lesdites températures de rosée (Tr) et de bulle (Tb) et pour l'introduire à cette température intermédiaire dans la colonne (5) de séparation CO/CH₄.

5. Installation suivant la revendication 4, caractérisée en ce qu'elle comprend une colonne (3) de lavage au méthane de ladite phase vapeur, des moyens (11) pour détendre le liquide de cuve de cette colonne, des moyens pour introduire ce liquide détendu dans la colonne (4) d'élimination d'hydrogène, et des moyens pour comprimer et introduire en tête de la colonne de lavage (3) une partie du méthane liquide produit en cuve de la colonne (5) de séparation CO/CH4.

6. Installation suivant la revendication 4 ou 5, caractérisée en ce que le cycle frigorifique est un cycle au monoxyde de carbone, le monoxyde de carbone nécessaire pour le fonctionnement de ce cycle étant prélevé sur la production de tête de la colonne (5) de séparation CO/CH4.

## Patentansprüche

1. Verfahren zur gleichzeitigen Herstellung von Methan und Kohlenmonoxyd aus einem im wesentlichen aus diesen zwei Bestandteilen und Wasserstoff bestehenden behandelten Gas, bei dem das behandelte Gas (GT) abgekühlt und teilweise kondensiert wird, um eine Dampfphase und eine Flüssigphase zu bilden, bei dem die Flüssigphase entspannt, verdampft, wieder erhitzt und in eine Kolonne (4) zum Entfernen von Wasserstoff eingeleitet wird, die Bodenflüssigkeit dieser Kolonne entspannt und in mehrere Ströme unterteilt wird, ein erster dieser Ströme verdampft und wieder bis zu seinem Taupunkt (Tr) erhitzt und in eine CO/CH₄-Kolonne (5) eingeleitet wird und ein zweiter dieser Ströme bei einer Temperatur in der Nähe seines Siedepunktes (Tb) in dieselbe Kolonne (5) eingeleitet wird, und bei dem mittels eines externen Kältekreislaufs Kälte zugeführt wird, dadurch gekennzeichnet, daß die Bodenflüssigkeit vor deren Entspannung unterkühlt wird und nach der Entspannung in drei Ströme unterteilt wird, wobei der dritte Strom verdampft und wieder auf eine mittlere, zwischen dem Taupunkt und dem Siedepunkt liegende Temperatur (Ti) erhitzt wird und mit dieser mittleren Temperatur in die CO/CH₄-Zerlegungskolonne (5) eingeleitet wird.

2. Verfahren nach Anspruch 1, dadurch gekennzeichnet, daß die Dampfphase in einer dritten Kolonne (3) mit flüssigem Methan ausgewaschen wird, um am Kopf ein im wesentlichen aus Wasserstoff bestehendes Gas und eine Bodenflüssigkeit herzustellen, wobei letztere ebenfalls entspannt und in die Kolonne (4) zum Entfernen von Wasserstoff eingeleitet wird und wobei ein Teil des am Boden der CO/CH₄-Zerlegungskolonne (5) hergestellten flüssigen Methans für das Auswaschen mit Methan verwendet wird.

3. Verfahren nach Anspruch 1 oder 2, dadurch gekennzeichnet, daß der Kältekreislauf ein Kohlenmonoxydkreislauf ist, wobei das für den Betrieb dieses Kreislaufs notwendige Kohlenmonoxyd von dem am Kopf der CO/CH₄-Zerlegungskolonne (5) hergestellten Kohlenmonoxyd entnommen wird.

4. Anlage zur gleichzeitigen Herstellung von Methan und Kohlenmonoxyd aus einem im wesentlichen aus diesen zwei Bestandteilen und Wasserstoff bestehenden behandelten Gas, mit einem Wärmetauscher (1), mit einem Phasenseparator (2), mit einer Kolonne (4) zum Entfernen von Wasserstoff und einer CO/CH₄-Zerlegungskolonne (5), mit einer Einrichtung zum Abkühlen und teilweisen Kondensieren des behandelten Gases (GT) und zu dessen Einleitung in den Phasenseparator, um eine Dampfphase und eine Flüssigphase zu bilden, mit einer Einrichtung zum Entspannen, Verdampfen und Wiedererhitzen der Flüssigphase und zu deren Einleitung in die Kolonne (4) zum Entfernen von Wasserstoff, mit einer Einrichtung zum Entspannen der Bodenflüssigkeit dieser Kolonne (4) und Unterteilen in mehrere Ströme, mit einer Einrichtung zum Wiedererhitzen eines ersten dieser Ströme bis zu seinem Taupunkt (Tr) und zu dessen Einleitung in die CO/CH₄-Zerlegungskolonne (5), mit einer Einrichtung zum Einleiten eines zweiten dieser Ströme bei einer Temperatur in der Nähe seines Siedepunktes (Tb) in dieselbe Kolonne (5) und mit einem Kältekreislauf, der Kälte liefert, dadurch gekennzeichnet, daß die Anlage mit einer Einrichtung zum Unterkühlen der Bodenflüssigkeit vor deren Entspannung, mit einer Einrichtung zu deren Unterteilung in drei Ströme und mit einer Einrichtung zum Verdampfen und Wiedererhitzen des dritten Stroms auf eine mittlere, zwischen dem Taupunkt (Tr) und dem Siedepunkt (Tb) liegende Temperatur (Ti) und zu dessen Einleitung in die CO/CH₄-Zerlegungskolonne (5) bei dieser Temperatur versehen ist.

5. Anlage nach Anspruch 4, gekennzeichnet durch eine Kolonne (3) zum Auswaschen der Dampfphase mit Methan, durch eine Einrichtung (11) zum Entspannen der Bodenflüssigkeit dieser Kolonne, durch eine Einrichtung zum Einleiten dieser entspannten Flüssigkeit in die Kolonne (4) zum Entfernen von Wasserstoff und durch eine Einrichtung zum Komprimieren und Einleiten eines Teils des am Boden der CO/CH₄-Zerlegungskolonne (5) hergestellten flüssigen Methans am Kopf der Auswaschkolonne (3).

6. Anlage nach Anspruch 4 oder 5, dadurch gekennzeichnet, daß der Kältekreislauf ein Kohlenmonoxydkreislauf ist, wobei das für den Betrieb dieses Kreislaufs benötigte Kohlenmonoxyd von dem am Kopf der CO/CH₄-Zerlegungskolonne (5) hergestellten Kohlenmonoxyd entnommen wird.

## Claims

1. Process for the simultaneous production of methane and carbon monoxide from a treated gas essentially consisting of these two components and hydrogen, of the type in which the treated gas (GT) is cooled and partially condensed to produce a vapor phase and a liquid phase, the liquid phase being expanded, vaporized, warmed up and introduced into a column (4) for withdrawing hydrogen; the liquid from the vat portion of this column is expanded and divided into a plurality of flows; a first one of these flows is vaporized and warmed up to its dew temperature (Tr) and is introduced into a CO/CH₄ column (5), and a second one of these flows is introduced into this same column (5) at about its bulb temperature (Tb); and an input of cold is supplied by means of an external refrigerating cycle; characterized in that said vat liquid before being expanded is sub-cooled and after being expanded is divided into three flows, the third flow being vaporized and warmed up to a temperature (Ti) which is intermediate between said dew and bulb temperatures and is introduced while at said intermediate temperature into the column (5) which is used for the separation of CO and CH₄.

2. Process according to claim 1, characterized in that said vapor phase is washed away with a liquid methane in a third column (3) to produce a head gas essentially consisting of hydrogen and a vat liquid, the latter being also expanded and introduced into column (4) for withdrawing hydrogen, a portion of the liquid methane produced in the vat portion of column (5) for the separation of CO and CH₄ being used to wash with methane.

3. Process according to claim 1 or 2, characterized in that the refrigerating cycle is a carbon monoxide cycle, the carbon monoxide required for the operation of this cycle being taken from the production in the head portion of the column (5) for the separation of CO and CH₄.

4. Apparatus for the simultaneous production of methane and carbon monoxide from a treated gas which essentially consists of these two elements and hydrogen, of the type comprising a heat exchanger (1), a phase separator (2), a column (4) for withdrawing hydrogen and a column (5) for the separation of CO and CH₄, means for cooling and partially condensing the treated gas (GT) and introducing same into the phase separator to give a vapor phase and a liquid phase, means for expanding, vaporizing and warming the liquid phase and introducing same into the column (4) for withdrawing hydrogen; means for expanding and dividing the liquid from the vat portion of this column (4) into a plurality of flows; means for warming up a first one of these flows up to its dew temperature (Tr) and introducing same into the column (5) for the separation of CO and CH₄; means for introducing a second one of these flows into this same column (5) at about its bulb temperature; and a refrigerating cycle supplying an input of cold, characterized in that means are provided for sub-cooling said vat liquid, before expansion, means for dividing same into three flows, and means are provided for vaporizing and warming the third flow up to a temperature (Ti) which is intermediate between said dew (Tr) and bulb temperatures (Tb) and for introducing same at that intermediate temperature into the column (5) for the separation of CO and CH₄.

5. Apparatus according to claim 4, characterized in that it comprises a column (3) for washing said vapor phase with methane, means (11) for expanding the vat liquid from this column, means for introducing this expanded liquid into the column (4) for withdrawing hydrogen, and means for compressing and introducing into the head portion of the washing column (3), a portion of the liquid methane produced in the bottom part in the vat portion of the column (5) for the separation of CO and CH₄.

6. Apparatus according to claim 4 or 5, characterized in that the refrigerating cycle is a carbon monoxide cycle, the carbon monoxide required for the operation of this cycle being taken from the production of the head portion of the column (5) for the separation of CO and CH₄.
